# EUROPEAN PATENT SPECIFICATION

(11) **EP 1 918 153 B1**
(45) Date of publication and mention of the grant of the patent: **29.06.2011**
(21) Application number: 06126120.2
(22) Date of filing: 14.12.2006
(51) Int. Cl.: B60L 9/00, H02J 3/00

(54) **Rail vehicle or other path-constrained vehicle equipped for providing solar electric power for off-vehicle use**
Schienenfahrzeug oder sonstige bahngebundene Fahrzeuge mit Mitteln für die Bereitstellung von Solarstrom zum Gebrauch außerhalb des Fahrzeugs
Véhicule sur rails ou autre véhicule contraint dans sa trajectoire équipé pour fournir de l'énergie électrique solaire pour l'utilisation en dehors du véhicule

(30) Priority: 06.11.2006 US 594038
(43) Date of publication of application: 07.05.2008
(73) Proprietor: Plishner, Paul J., Southhampton, NY 11968 (US)
(72) Inventor: Plishner, Paul J., Southhampton, NY 11968 (US)
(74) Representative: Eisenführ, Speiser & Partner

(56) References cited:
- WO-A2-02/058956
- CH-A5- 679 296
- DE-A1- 19 546 000
- US-A1- 2002 132 144
- KEMPTON W ET AL: "Vehicle-to-grid power implementation: From stabilizing the grid to supporting large-scale renewable energy" JOURNAL OF POWER SOURCES, ELSEVIER, AMSTERDAM, NL, vol. 144, no. 1, 1 June 2005 (2005-06-01), pages 280-294, XP004905308 ISSN: 0378-7753

## Description

### FIELD OF THE INVENTION

The invention pertains to the field of electric power generation. More particularly, the invention concerns a rail vehicle, such as a freight car or passenger car of a train, providing electric power from solar collectors formed on the body of the vehicle, for use by for example the public power grid, and doing so while the vehicle is either stationary or in motion. The invention also concerns other kinds of path-constrained vehicles providing solar electric power for off-vehicle use, such as maglev vehicles and wheeled buses that must follow a catenary to receive electric power for propulsion.

### BACKGROUND OF THE INVENTION

The public electric power grid is, from time to time, unable to respond to demands for electric power. The situation is not likely to improve, on account of increasing population with attendant increase in demand. In addition, while sources of electric power (power-generation facilities) traditionally relied on by the grid do currently provide the electric power we need, they typically do so using fossil fuels, at the risk of contributing to global warming.

It is self-evident that having many different sources of electric power all contributing to the grid would make for a more robust grid. The invention is aimed at this, combining electric power generation facilities from many different individual sources for distribution by the public electric power grid for the benefit of the whole population, both industrial and private.

Ideally, in view of global warming and other environmental concerns, each source of electric power is a clean source, e.g. solar power or geothermal power or wind power. Of these, only solar electric power is available everywhere at least to some extent.

Solar power collectors are already being used to some extent to contribute power to the power grid, but the cost of solar collectors has argued against such use in other than large-scale applications in very favorable environments. With recent advances in solar collector technology, however, it is likely that it can be worthwhile, from a cost standpoint, for small-scale applications of solar collectors to contribute electric power to the grid.

What is needed is a way to make use of the recent advances in solar collector technology to provide solar electric power to the grid on a small-scale individual-by-individual basis, or to at least reduce the load on the grid by using such solar electric power instead of relying on the grid.

The prior art of course teaches installing solar collectors as part of a home or business and using the electric power provided by the solar collectors, and even providing some of the electric power to the grid.

CH 679296A5 discloses a railway vehicle. Electric power generated by solar collectors arranged on the railway vehicle is provided to on-board docking stations of the vehicle. The docking stations serve for charging batteries of motorvehicles parked on a lower level inside the vehicle.

### SUMMARY

The invention, however, looks to another installation of solar collectors-as part of a rail vehicle or other path-constrained vehicle, and not for providing electric power to the propulsion system of the vehicle but instead for providing electric power for off-vehicle use, possibly by the grid, and doing so both while the vehicle is in motion and while stationary.

A rail vehicle such as a train car is an example of a path-constrained vehicle, because a rail vehicle is constrained to go where the rails go. A maglev vehicle is another example, as such a vehicle is constrained to move along a guideway. Besides these, another example of a path-constrained vehicle is an electric wheeled bus, one that relies on a catenary system for electric power and so must follow a path within the set of paths defined by the catenary system, i.e. it must go where the catenary system goes. Such a vehicle is here called a catenary vehicle.

Of course, there would be cost associated with providing and maintaining the equipment needed by the rail vehicle or other path-constrained vehicle for producing the solar electric power. Such cost would likely be borne by the owner or lessee of the vehicle. So what would be needed also is a way to provide compensation for the power provided by the vehicle.

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

A vehicle according to the invention is path-constrained, i.e. is constrained to move along a path defined by a rail or guideway or catenary system, and includes a solar collector formed or disposed over at least a portion of the surface of the vehicle for providing electric power, and also includes equipment for providing the electric power for off-vehicle use to a coupler including a conductor disposed along or provided as part of the path defined by the rail or guideway or a catenary. The vehicle may or may not be in motion along the path. In case of a vehicle equipped to travel along a rail or guideway, the coupler can include a catenary system or a third rail (or even the rails or guideway). In case of a catenary vehicle (a wheeled vehicle receiving power from a catenary), the coupler includes the catenary. The coupler is part of what is here called a power node, since power from one or more vehicles according to the invention is provided to the node, and from there the power may be passed on to the public electric power grid, or used locally.

The invention allows for the vehicle owner or lessee to be compensated for providing the electric power. For this, the vehicle is equipped to meter (measure) the power it provides (which can also include power from regenerative braking, as explained below, not just power from solar collectors), and also provide an account that can be compensated for the power provided by the vehicle, based on the metering.

The power node is a second aspect of the invention as claimed with the system according to claim 3. Besides receiving the electric power from the vehicle, and perhaps simultaneously from other vehicles, the power node can provide the electric power to the grid (usually on demand), after conditioning the power so as to be useable by the grid. In addition, the power node is equipped to receive accounting information and metering information from the vehicle, and the power node or a third party communicably coupled to the power node can be equipped to compensate the vehicle according to the accounting information based on the metering information.

The invention has especial merit in that at least some kinds of rail vehicles, notably trolley cars or individual cars or even engines of electric trains, are increasingly likely to include solar collectors for providing at least some electric power for their own use (or the train's use), even if such vehicles also derive electric power from an external source such as the grid. With the invention, any excess power such a rail car might generate using its solar collectors can be saved to for example the grid, instead of going to waste.

### BRIEF DESCRIPTION OF THE DRAWINGS

The above and other objects, features and advantages of the invention will become apparent from a consideration of the subsequent detailed description presented in connection with accompanying drawings, in which:
Figure 1 is a block diagram of a system according to the invention, showing a path-constrained vehicle including equipment for generating electric power derived from solar energy and including an interface for providing the electric power to a coupler of a power node for off-vehicle use, and also showing components of the power node, including components for accounting so as to credit an account associated with the vehicle.
Figures 2A shows the interface of the vehicle and the coupler of the power node in more detail in an embodiment in which the vehicle performs power metering.
Figures 2B shows the interface of the vehicle and the coupler of the power node in more detail in an embodiment in which the vehicle performs power metering.
Figure 3 is a block diagram/ flow diagram showing an embodiment of the invention in which a plurality of power nodes provide electric power received from path-constrained vehicles to a power grid, and a third party provides compensation to accounts associated with the vehicles.
Figure 4 is a flow chart illustrating a method of operation of a power node and a third-party facility serving many power nodes, according to the invention.

### DETAILED DESCRIPTION

The term path-constrained vehicle is used here to mean a vehicle that moves along a rail, a vehicle that moves along a guideway as in a maglev train system, or a wheeled vehicle that must follow a catenary in order to receive electric power from the catenary for powering the vehicle. The term "train" as used here is intended to encompass any single such vehicle or any plurality of such vehicles connected in tandem. As used here, a train should be understood to encompass a railway, a rail line, a commuter line, and a freight line (any one of which may be a train that rolls, or a train that is magnetically levitated).

Thus, a path-constrained vehicle can include a trolley car or any other kind of rail vehicle that is unconnected to other vehicles in tandem but moves along a rail or guideway, or a car in a train of cars pulled by an engine, or a vehicle of a maglev train, or a wheeled bus that must be steered so as to follow a catenary system from which it receives electric power. Such a vehicle can be connected in a train or not be connected to any other such vehicles, and can move under the force of a separate train engine vehicle pulling or pushing the vehicle, or it can move using electric power provided by an external source via a catenary system or a via a third rail (possibly in combination with a fourth rail) or it can move under forces provided by a guideway (which forces are usually magnetic, and typically springing from electromagnetic systems).

As used here, the term path-constrained vehicle does not encompass automobiles moving along a road if the automobiles are self-powered and so need not follow the road in order to have power for propulsion, but do typically follow a road although merely because the road is a path of least resistance in travel between two points.

Some trains are at least partially powered by electric power from an external power source, and some of these rely on a catenary system, part fixed relative to the rails and part attached to the train, for providing the electric power. Others of these at least partially electric trains rely on a third (and sometimes even a fourth rail) for the electric power. A "rail" as used here is to be distinguished from what a "third rail" (or a "fourth rail"). A third (or fourth) rail, as that term is commonly used and as that term is used here, is not a structure used to constrain a rail vehicle to a route of travel, but instead is used for providing electric power to the rail vehicle. The vehicle taps into the power using a pickup attached to the vehicle that rides on or under, but at any rate in contact with a portion of the third (or fourth) rail as the vehicle moves. As such, a third (or fourth) rail is an alternative to what is commonly called a catenary system, which is an overhead structure, whereas a third (or fourth) rail is situated under the rail vehicle or alongside.

Now according to the invention, a path-constrained vehicle provides electric power for off-vehicle use, using solar collectors formed on the surface of the vehicle body, especially the new kinds of solar cells now under development and mentioned below, and possibly also using regenerative braking. The electric power is provided to what is here called a power node. The power node can direct the electric power provided by the vehicle to the public electric power grid (possibly via an intermediary), or can direct the electric power for local use, including for possible re-use by the path-constrained vehicle or by other vehicles to which the power node is electrically connected.

Thus, a path-constrained vehicle according to the invention can provide clean electric power to the grid, but at any rate can provide electric power for off-vehicle use. According to the invention further, the vehicle owner or lessee is compensated for providing the electric power. The compensation is figured based on metering the electric power provided by the vehicle. The compensation may be provided by the owner/ operator of the power node, or may be provided by a third party, which may be the public electric power grid entity.

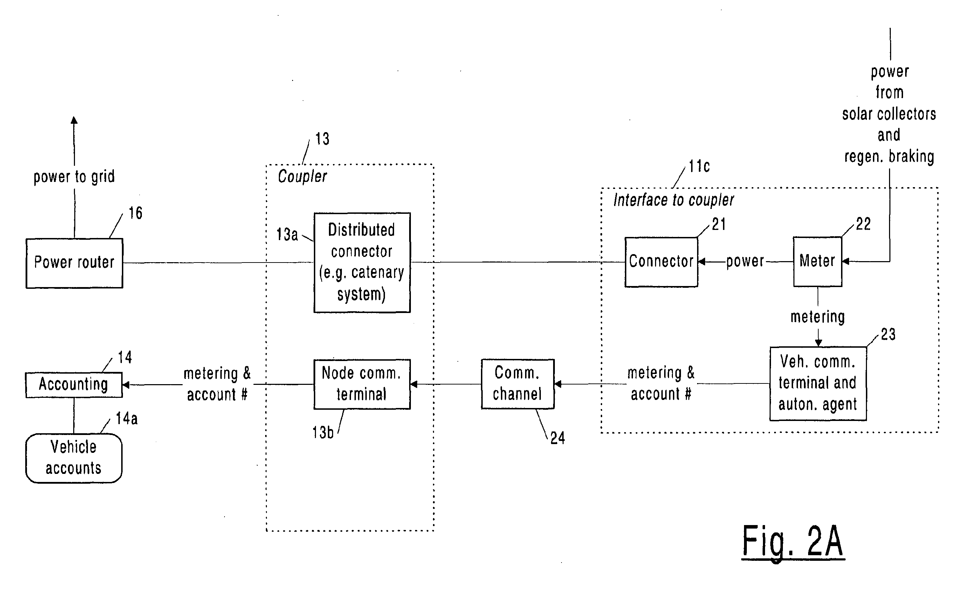

According further to the invention, a vehicle may be configured to communicate accounting information when it interfaces with the power node to provide the electric power it derives from solar energy, and metering is performed to track the power provided by the vehicle. The accounting information typically includes an account number indicating what is here called a vehicle account to be compensated based on the metering. The metering may be performed by the vehicle or by the power node. Figure 2A shows the interface 11c of the path-constrained vehicle 11 in an embodiment where the path-constrained vehicle performs the metering, and so the interface 11c includes a meter 22 for that purpose. If the metering is provided by the vehicle, the accounting information passed to the coupler 13 is to be understood as including the metering. The provider of the power node or a third-party may then sell the electric power to the power grid. A third party, advantageously, is configured to track the electric power provided by different path-constrained vehicles at different times and at different power nodes, and to periodically compensate the vehicle accounts associated with the different path-constrained vehicles. Such an arrangement minimizes the overhead needed for compensating a path-constrained vehicle for the electric power it provides, in that it achieves economy of scale. The third party can be e.g. a private power marketing company, or even the public electric power grid itself.

The invention is not limited to any particular arrangement by which the electric power provided by the path-constrained vehicle may or may not be used or sold after it is provided to the power node. The invention encompasses having the path-constrained vehicle provide the electric power derived from solar collectors even without compensation.

The term solar electric power is to be understood broadly. The invention encompasses not only providing electric power derived from solar energy (besides providing electric power from regenerative braking), but also electric power from infrared or other non-visible portions of the electromagnetic spectrum. So the term solar collector should be understood here as indicating not only a device for collecting energy from the sun's rays/ electromagnetic radiation (both visible and invisible), but also from electromagnetic radiation not originating in the sun (including e.g. electromagnetic radiation originating in other stars). For example, the "solar collector" could derive electric power from infrared radiation emitted by any object in consequence of the object having thermal energy, i.e. having a non-zero temperature (on the absolute temperature scale).

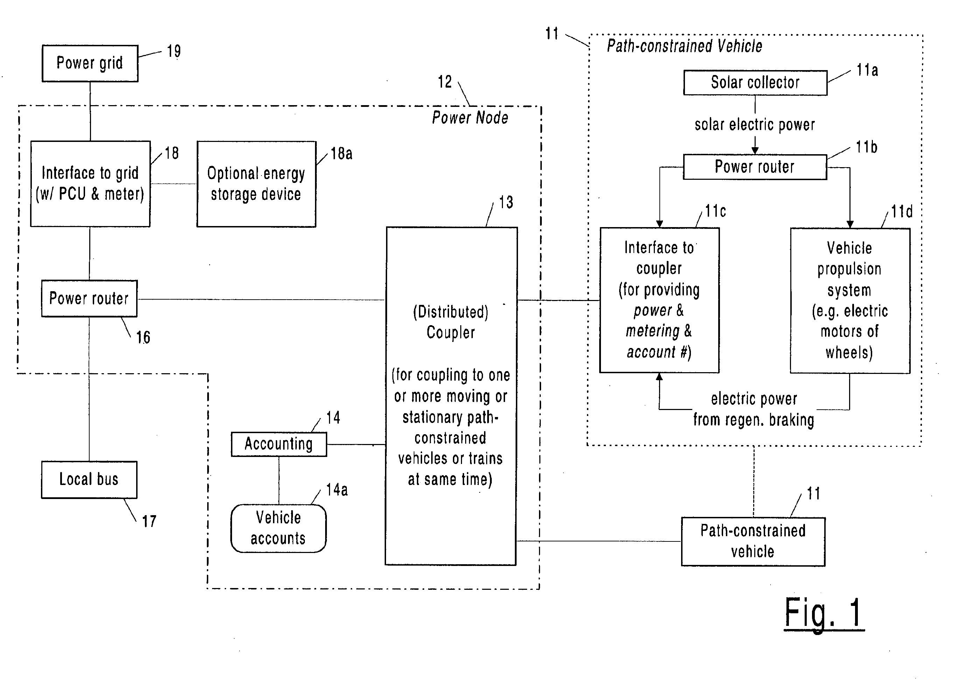

Referring now to Fig. 1, a path-constrained vehicle 11 according to the invention is equipped with a solar collector 11 a that converts solar power (as that term is used here, as explained above) into electric power and provides the electric power to a power router 11 b, which in turn provides the electric power either to a vehicle propulsion system 11 d or to an interface 11 c to a distributed coupler 13 of a power node 12, depending on whether electric power is needed by the vehicle. In some embodiments, the vehicle may also communicate the accounting information useable for compensating the vehicle for providing the electric power. (The power router 11 b in the vehicle 11 is optional, and of course would not be needed in case of a vehicle making no use internally of any of the solar-derived electric power.)

The coupler 13 of the power node 12 can be described as "distributed" in that at least a component is located along or provided as a part of the path along which the vehicle is constrained to travel, and so is not located at a single discrete spot, but is instead distributed along the path. For example, the coupler can include the catenary system, or third rail (and possibly also a fourth rail), or a rail, or a guideway, as explained below. Such a component is even more precisely described as continuously distributed. (Besides the continuously distributed component, the coupler can include one or more node communication terminals at discrete locations described below, in order to communicate with the path-constrained vehicle for purposes of the accounting mentioned above needed in case of compensating a path-constrained vehicle for providing electric power to the power node.)

Referring now to Figure 1 and Figure 2A, the coupler 13 and the path-constrained vehicle 11 of Figure 1 are shown in more detail in an embodiment in which the coupler includes only one discrete component, and the path-constrained vehicle performs the metering. The coupler 13 is shown as including a distributed connector 13a (e.g. a catenary system) as the (continuously) distributed component, which receives the electrical power from the path-constrained vehicle, and a node communication terminal 13b as the discrete component. The interface 11c of the path-constrained vehicle is shown as including a (vehicle) connector 21 for providing the electrical power, a meter 22 for measuring the power provided, and a vehicle communication terminal and autonomous agent 23 for providing the accounting information, which in this embodiment includes not only the vehicle account number but also the metering. The autonomous agent automatically, without human intervention, operates the vehicle communication terminal to provide the accounting information via a communication channel 24. The communication channel is such as to allow multiple access, i.e. it allows more than one path-constrained vehicle to communicate with the node communication terminal at the same time. The communication terminal can be, in case of wireless transmission, a carrier propagating in air modulated using a modulation scheme that allows multiple access, such as one or another of the variants of code division multiple access. On the other hand, the communication channel can be a carrier propagating over the continuously distributed component of the coupler, i.e. over the distributed connector 13a. The node communication terminal 13b could, upon receipt of the accounting information, provide the accounting information to a third party facility (including e.g. the grid), or could provide it to an accounting module 14, which could store it in a data store 14a for later compensating the path-constrained vehicle.

The communication of the accounting information can be via commercial cellular communication, or via a private wireless communication network, including a private wireless communication network used for train signaling.

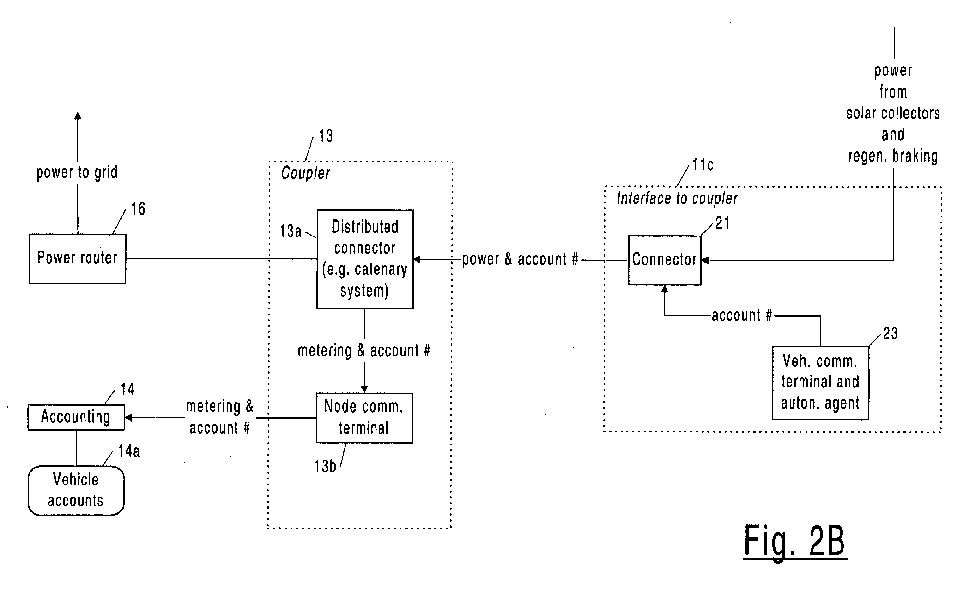

Referring now to Figure 1 and Figure 2B, an embodiment is shown in which the coupler 13 again includes only one discrete component, but the power node 12 performs the metering, instead of the path-constrained vehicle 11. The coupler is shown in this case as again including a distributed connector 13a and a node communication terminal 13b, but the distributed connector includes components that strip out from the received power the account number for the path-constrained vehicle, and meters the power provided by the path-constrained vehicle. So the connector 13a is a "smart" connector as opposed to a possibly purely electrical connector, which could be used in case of the embodiment of Figure 2A. The power from the path-constrained vehicle can be thought of as being tagged by the path-constrained vehicle account # (which could be a mere identifier of the vehicle, and so really only an alias for an account, as mentioned above). The connector would that can be thought of as tagging the power provided by the vehicle. The connector would meter the power associated with the account # and provide both the account # and metering as the accounting information needed to compensate the vehicle. The coupler would also again include a node communication terminal 13b which could communicate the accounting information to a third party facility, or could provide it to the accounting module 14, which in turn could store it in the data store 14a for later compensating the vehicle. One way for tagging the power would be to have each vehicle use a slightly different frequency for providing the power. The frequency used by a path-constrained vehicle could be assigned by a control signal also communicated over the distributed connector, in what might be called a downlink control channel (from the power node to the path-constrained vehicle). To be assigned a frequency for use in providing its electrical power, the vehicle could provide an identifier previously known to the power node, and request a frequency over an uplink channel.

The power node 12 may be certified as a so-called qualifying facility for electric power generation, i.e. certified under the Public Utility Regulatory Policies Act of 1978 as a co-generation facility or a small power production facility for providing electric power to the (electric) power (distribution) grid. The grid is a network of electric power lines and associated equipment used to transmit and distribute electricity over a geographic area.

The coupler 13 of the power node communicates the accounting information (account number and meter readings) to an accounting module 14 (which may be provided as part of the coupler). The accounting module holds the accounting information in a data store 14a of node vehicle accounts (as opposed to third-party vehicle accounts introduced below). The accounting information for the vehicle is ultimately used, by the power node or by a third-party facility, for compensating from time to time the account associated with the vehicle. The accounting module is provided as computer software hosted by a computer. The computer is typically situated remotely from the coupler 13, and communicably coupled to the coupler (wirelessly or via a wireline connection), e.g. over the Internet or a private network or even a commercial telecommunication network.

The vehicle account number could be an encrypted account number or information indicative of an account number known to the power node. The account could be for example a general credit card account or an account number for some other general purpose account (for example a checking account), or an account created with the power node or a third party especially for receiving compensation for the electric power provided by the vehicle. The account number could be stored onboard the vehicle as part of the interface 11 c to the coupler of the power node, and communicated to the coupler by the interface so as to keep any actual financial account number secure. For example, as mentioned the account number could be an alias (so that the true account number is known to the power node via the alias and via an offline communication of the corresponding true financial account number), or the account number can be a true financial account number and communicated in encrypted form based e.g. on a public/private key pair.

Referring again to Figures 1 and 2A (or Figure 2B), the power node 12 could include a power router 16, which would determine whether the power from the path-constrained vehicle should be provided to the grid (via an interface 18 to the grid), or should instead be made available to a local bus 17. The power router 16 could be communicably coupled to the power grid 19 via the interface 18 to the grid, for receiving requests to provide electric power to the grid. The interface 18 would also serve for providing the electric power, and often also for receiving electric power from the grid, as needed.

The electric power provided to the grid by the power node 12 would typically be adapted for the power grid by means of a power conditioning unit 15, i.e. the power conditioning unit would provide the power so as to have predetermined characteristics, such as voltage as a function of time.

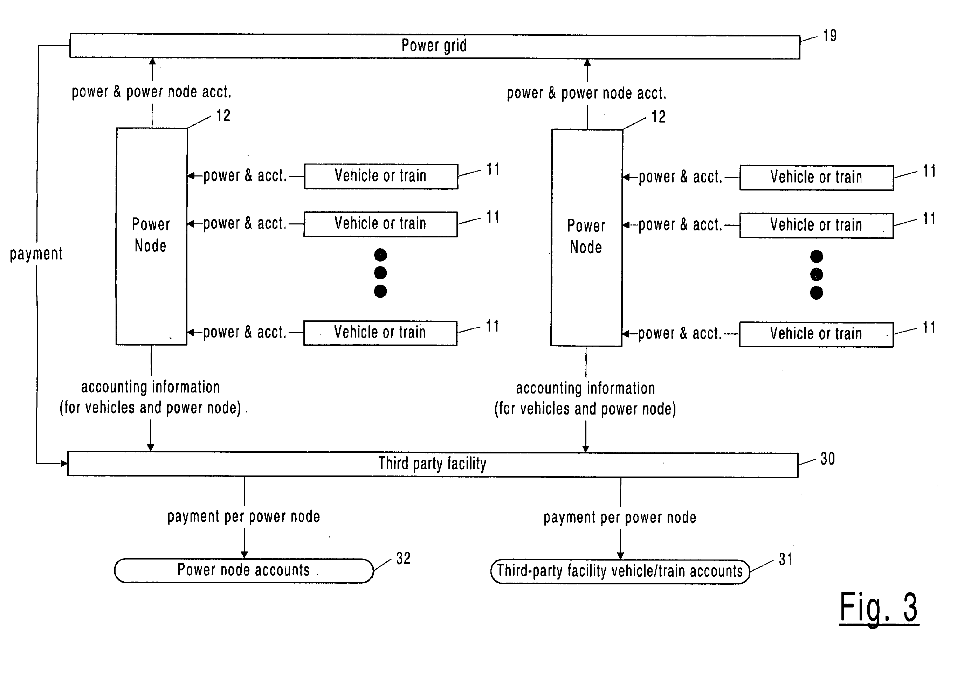

As it is advantageous to have power at the ready for use by the grid, the power node 12 will often include an energy storage device 18a (e.g. a battery and AC/DC converter). The interface 18 to the grid would then draw power from the energy storage device 18a on request by the grid. The power node could be provided compensation by the grid (or an intermediary, if such is involved, such as a power marketer) based on the total conditioned power provided by the power node. For this, of course, the power provided to the grid by the power node must be metered, and the grid (or an intermediary) could measure the power received from the power node and could also receive accounting information from the power node (perhaps only at the beginning of the business relationship, and then only as changes necessitate) indicating an account--a power node account--to be compensated for the power provided by the grid. An embodiment is described in reference to Figure 3 where a third-party compensates such a power node account, but the invention of course encompasses also embodiments in which there is no third party. It is also possible of course to have the power node provide the metering, possibly using equipment provided by the grid.

The solar collector 11 a (Figure 1) includes a solar collector medium and also electrodes. The solar collector medium is, according to a preferred embodiment of the invention, one or another of the new kinds of solar cells now under development. One such solar cell is of a type that can be painted or printed (as in inkjet printing) onto the body of the vehicle, i.e. it is spreadable. The solar collecting medium must of course be placed in physical contact with electrodes. Other advantageous solar collector media include solar cells laminated onto the surface of the vehicle, or otherwise built into the surface of the vehicle.

The new kinds of solar collecting medium are formed from conducting plastics/polymers and nano-based particles (e.g. so-called buckyballs, described below) or semiconductor particles, mixed in a solution, which can then be painted/printed in a process similar to inkjet printing onto the surface of the vehicle. There the nanomaterials or semiconductor particles, in consequence of electrochemical forces, assemble themselves within the plastic into structures serving as the basis of a solar cell, i.e. a solar cell except for the electrodes needed to extract the solar energy as electrical current, what might be called the solar cell body. Such a solar cell body is thus a spreadable medium, in the sense of paint or ink.

As an example, SIEMENS, of Erlangen, Germany, is researching buckyballs (carbon structures in the form of a spheroid, having flat panels joined together to form a sphere, like a soccer ball) and conductive plastic for solar cells and photodetectors, in what can again be described as a photovoltaic film. As another example, KONARKA TECHNOLOGIES, of Lowell, MA, is developing what can be described as a photovoltaic film, relying on tiny semiconducting particles of titanium dioxide coated with light-absorbing dyes, bathed in an electrolyte, and embedded in plastic film. As another example, NANOSOLAR, of Palo Alto, CA, is testing titanium compounds and conductive plastic that can be sprayed on surfaces to form solar cells. As still another example, NANOSYS, also of Palo Alto, CA, is developing self-orienting nanoparticles in conductive plastic for photovoltaic coatings. As still another example, STMICROELECTRONICS, of Geneva, Switzerland, is blending buckyballs with carbon-based molecules containing copper atoms to make solar cells. In still another approach encompassed by the invention, GENERAL ELECTRIC, of Schenectady, NY, is currently adapting methods developed for printable lighting panels to make solar cells. Such solar cells could be printed on a suitable medium and laminated for protection against the environment. (ideally, the medium would be hermetically sealed from the environment.)

The basis for a spreadable solar collector medium, and in particular the Siemens technology, is work done in the early 1990s, when physicists Serdar Sariciftci and Alan Heeger at the University of California, Santa Barbara, created primitive photovoltaic devices by pouring a solution of conducting plastic and buckyballs onto a glass plate, spinning the plate to spread the solution into a film, and sandwiching the film between electrodes. The conducting polymer absorbed photons, providing electrons to the buckyballs where they were routed to an electrode. The film thus functioned as a solar cell.

Nanosolar sprays a mixture of alcohol, surfactants (substances like those used in detergents), and titanium compounds on a metal foil. As the alcohol evaporates, the surfactant molecules attach to each other so as to form elongated tubes. The titanium compounds fuse to the tubes and to each other. A block of titanium oxide bored through with holes just a few nanometers wide is thus formed on the foil. Nanosolar then fills the holes with a conductive polymer, adds electrodes, and covers the whole block with a transparent plastic.

A solar collecting medium formed using semiconductor polymers, such as is done by Konarka, is advantageous because the semiconductor polymers can be dissolved in common solvents and printed link inks. To do so, it is known in the art to interpenetrate electron donating and accepting (semiconductor) polymers at the nanometer length scale so that electrons and holes can be separated from each other and then transported toward electrodes. A polymer solar cell is made by sandwiching a thin film of polymer between two metallic conductors such as indium tin oxide and aluminum. These function as electrodes, and must have different highest occupied energy levels, so that electrons will flow from the conductor with the higher energy electrons to that with the lower energy electrons, from aluminum to indium tin oxide for example, until equilibrium is reached. The charge that builds up on the two electrodes generates an electric field across the semiconductor. When the semiconductor absorbs light the electric field pulls electrons to the positive electrode and holes to the negative electrode; in other words, an electric current results. According to the prior art, a polymer with two kinds of semiconductors is used; with only one kind, the electron kicked out of the valence band into the conduction band of the one semiconductor ultimately just recombines with the hole left behind in the valence band. Of the two kinds of semiconductors typically used, one has a higher energy conduction band than the other. The two kinds are mixed together as domains of one kind, interspersed among domains of the other kind; if the interspersing is sufficient then when an electron-hole combination is produced by absorption of light in the semiconductor having the higher energy conduction band and close enough to a domain of the other kind, the electron transfers to the other kind, and the hole is left behind in the first kind. The hole then travels in the electron-donating semiconductor to the negative electrode, and the electron travels in the accepting semiconductor to the positive electrode. The intermixing of domains of the two kinds of semiconductors must be sufficient so that a substantial portion of the photo-electrons donated by the donating semiconductor accepting semiconductor before combining with holes in the donating semiconductor. The overall thickness of the polymer, at least based on current work, is at least 100nm in order for enough light to be absorbed, and simple recombination/ decay of an electron-hole pair is believed to occur typically within a distance of approximately 6 nm, and so the domains are advantageously smaller than 6 nm in linear dimension.

As described above, the coupler 13 of the power node includes a distributed connector 13a. In case of a train having a catenary system or a third (and possibly a fourth) rail, the distributed connector advantageously includes the catenary system or the third (and fourth) rail, i.e. these structures can serve as a component of the distributed connector 13a, and the mating equipment onboard the path-constrained vehicle (i.e. the equipment that makes direct electrical contact with the catenary or third rail) can serve as a component of the vehicle connector 21 (Figure 2A or 2B).

In case of a train not having a catenary or third rail, the rail (train tracks) can be used, although at present rails are often used for block signaling to determine if a train is on a block of track. (In block signaling, a voltage is applied to a block of track, and unless a train is on the track, in which case the train will short-circuit the current caused by the voltage, current will flow to a sensor (relay), indicating the block is clear. The inventor envisions that in the near future, such archaic safety measures will be abandoned in favor of more state-of-the-art location measurement technologies (e.g. using a global positioning system), and so the tracks will be available for use as (at least one part of) the distributed connector. The blocks (electrically isolated sections of track), however, would be maintained, and there would typically be one power node for each such block.

In case of a guideway there is no direct electrical contact between a train and the guideway (at least while the train is at operational speed). If there is a catenary or third rail structure, such structures can serve as a component of the distributed connector 13a (Figure 2A or 2B), and the mating equipment onboard the "rail" vehicle can serve as a component of the vehicle connector 21 (same Figures). Often, however, there is no such structure, in which case the transfer of power would have to be by other than direct electrical contact, e.g. by induction, from coils onboard the maglev/ guideway vehicle to corresponding coils attached to or provided with the guideway. An onboard coil would then move past a coil fixed on or near the guideway, ideally in close proximity to the fixed coil, and so the fixed coil would see a changing magnetic field and a current would be induced. Any magnetic field produced by these coils must of course be kept from interfering with any magnetic fields used for either levitation, guidance, or propulsion. One way to avoid interference would be to magnetically isolate the coils used for the vehicle-to-train power transfer, i.e. to locate the coils far enough away (perhaps higher up on the side of tracks). Another way would be to shield the guideway fields from the fields of the coils used for the vehicle-to-train power transfer, using techniques known in the art for magnetic shielding, e.g. steel sheets or plates, or more exotically, sheets of superconducting material.

Referring now to Figure 3, an embodiment of the invention is shown in which a third-party facility 30 (operated by some third party, i.e. not necessarily the owner/operator of a power node) provides compensation for electric power provided to a plurality of power nodes 12 by a plurality of rail vehicles 11, and the power nodes in turn provide the electric power to the power grid 19. In a typical application, the power nodes may also provide to the grid (or an intermediary) accounting information indicating an account that is to be compensated, and metering of the power provided to the grid (or the intermediary) is performed, possibly by equipment owned by the power grid (or the intermediary) but located at the power node, or perhaps by equipment that is part of the interface 18 to the grid (Figure 1), which interface is part of the power node. The accounting information can include the measurement of the electric power provided to the grid, in case the metering is performed by the power node. For the third-party facility to compensate the path-constrained vehicles, the power nodes provide to the third-party facility the accounting information needed to do so, i.e. the vehicle account information and the metering information for the vehicle. For the third-party facility to also compensate the power nodes, as opposed to their being compensated directly by the grid, the power nodes provide accounting information to the third-party facility including a power node account identifier, and perhaps an indication of the electric power provided to the grid by the power node. (The metering information may not be needed in some arrangements. The grid may compensate the third-party facility separately for each power node, and the third-party facility may then pay a percentage to the power node, so that metering information is not needed by the third-party facility.) The third-party facility could, as in indicated in Figure 3, receive payment from the power grid for each power node, for the electric power provided to the grid by the power node, and could use this to compensate third-party facility vehicle accounts 31 associated with the vehicles initially providing the electric power. (The power nodes 12 may store in the local power node vehicle accounts 14a the information they provide to the third-party until they successfully communicate the information to the third-party facility.) The third-party facility, for services performed by the third-party facility, could keep a portion of the payment made by the power grid.

In embodiments in which a third-party facility is used to compensate the vehicle accounts, the third-party facility includes computer equipment communicably coupled to corresponding equipment at the power nodes, via e.g. the Internet. The computer equipment hosts computer software that performs all accounting needed for compensating the vehicle accounts in respect to electric power provided by vehicles associated with the vehicle accounts, according to the information communicated by the power nodes. The association of a path-constrained vehicle with a vehicle account is typically provided by the act of the vehicle communicating the vehicle account when connecting to a power node. The compensation calculations and consequent compensating of the vehicle accounts is advantageously a fully automatic process.

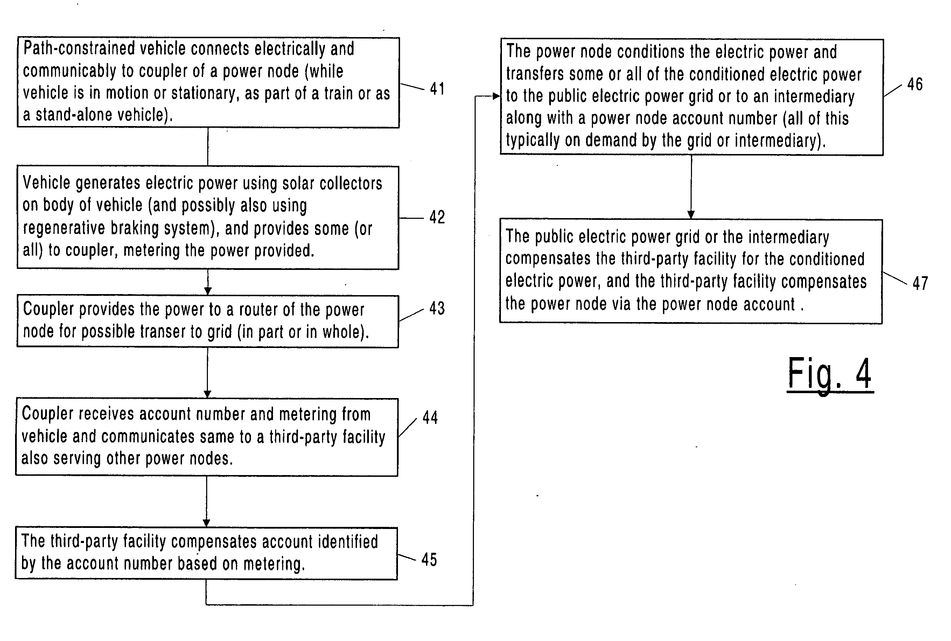

Referring now to Figure 4 and also to Figures 1 and 3, in a typical application of the invention in which metering is performed by each of the path-constrained vehicles 11 and the third-party facility 30 compensates the vehicles, in a first step 41 each of the one or more vehicles couples electrically and communicably to the (distributed) coupler 13 of the power node 12. With respect to the coupling for communication as opposed to for power transfer, the coupling amounts to establishing a communication channel. In some cases the electrical coupling for the power transfer is also done via the control channel as mentioned above (i.e. a frequency or time slot or other multiple access device is requested or providing the power over the distributed connector, which is also possibly being used by other rail vehicles for providing power to the power node).

In a next step 42, the vehicle 11 generates electric power using the solar collectors 11 a on the body of vehicle (and possibly also using a regenerative braking system), and provides some (or all) to the (distributed) coupler 13 of the power node via the interface 11c of the vehicle, metering the power provided. (The metering, as described above, could instead be performed by the power node.) In a next step 43, the coupler of the power node provides the power to the power router 16 for possible transfer to the power grid 19. In a next step 44, the coupler receives accounting information from the vehicle, including information indicative of an account to be compensated for the power provided by the vehicle, and also the metering, i.e. information indicative of the power provided by the vehicle. In case of metering performed by the power node instead of the vehicle, the accounting information includes only information indicative of an account to be compensated for the power provided by the rail vehicle to the power node. Although as described here an account number is indicated for each rail vehicle, the invention encompasses an entire train of path-constrained vehicles acting in unison to provide electric power to the power node, in which case only one account number is used for the entire train.

In a next step 45, the third-party facility compensates the account identified by the accounting information for the vehicle (or train). For this, the power node communicates the accounting information to the third-party facility. The third-party facility may then compensate the vehicle according to a schedule, i.e. from time to time, e.g. monthly, taking into account the total power provided by the rail vehicle since last receiving compensation.

In a next step 46, the power node conditions the electric power received from the vehicle and transfers possibly only some of the conditioned electric power to the public electric power grid 19 or to an intermediary (not shown). In a next step 47, the public electric power grid or the intermediary then compensates the third-party facility for the conditioned electric power, and the third-party facility compensates the power node (and also other power nodes, based on their respective contribution of power to the grid or intermediary). The power grid facility or intermediary may compensate the power node directly of course. At any rate, accounting information regarding the power node must be used. For example, as mentioned above, each power node could have an account that would be compensated for the conditioned electric power it provides.

## Claims

1. A vehicle (11), comprising:
means adapted to travel along a path defined by a rail or guideway or catenary,
means adapted to generate electric power using solar collectors disposed on the surface of the vehicle;
means (21) adapted to provide the electric power, which is generated by the solar collectors, for off-vehicle use to a coupler (13) that is arranged off-vehicle, is part of an off-vehicle power node and has an electrical conductor (13a) disposed along the path, wherein the means for providing the electric power includes a coupler interface (11c) attached to the vehicle;
means (23) adapted to communicate to the coupler (13) vehicle-account information for payment to be made for the electric power provided, the vehicle account being associated with the vehicle serving for receiving payment to be made for the electric power provided by the vehicle; and
means (21) adapted to meter the electrical power provided to the coupler (13) and adapted to communicating to the coupler metering information indicative of the electrical power provided to the coupler (13).

2. A method for operating a vehicle, which is equipped so as to be constrained to follow a path defined by a rail or guideway or catenary, the method comprising:
generating electric power using solar collectors disposed on a surface of the vehicle (11);
providing the electric power for off-vehicle use from the vehicle to a coupler (13) that is arranged off-vehicle, is part of an off-vehicle power node and includes an electrical conductor disposed along the path, via a coupler interface (11) attached to the vehicle;
communicating from the vehicle (11) to the coupler (13) vehicle account information associated with the vehicle for payment to be made for the electric power provided, the vehicle account being associated with the vehicle serving for receiving payment to be made for the electric power provided by the vehicle; and
metering the electrical power provided to the coupler (13) on the vehicle, and
communicating to the coupler metering information indicative of the metered electrical power.

3. A system, comprising
a vehicle according to claim 1 and
an off-vehicle power node (12), comprising:
means adapted to receive said electric power for off-vehicle use from said vehicle, the means including a coupler (13) arranged off-vehicle and having an electrical conductor disposed along said path defined by a rail or guideway or a catenary;
means adapted to receive accounting information and metering information from the vehicle via the coupler (13); and
means adapted to forward the accounting information and metering information to an external third party facility (30).

## Patentansprüche

1. Fahrzeug (11), enthaltend:
Mittel, geeignet zum Fortbewegen entlang eines durch Schiene, Führungsbahn oder Fahrleitung definierten Weges,
Mittel, geeignet zum Erzeugen elektrischer Energie unter Verwendung von auf der Oberfläche des Fahrzeugs angeordneten Solarkollektoren;
Mittel (21), geeignet zum Liefern der elektrischen Energie, die von den Solarkollektoren erzeugt wird, für fahrzeugferne Nutzung an einen Koppler (13), der fahrzeugfern angeordnet ist, Teil eines fahrzeugfernen Energieknotens ist und einen entlang des Weges angeordneten elektrischen Leiter (13a) aufweist, wobei das Mittel zum Liefern der elektrischen Energie eine am Fahrzeug angebrachte Kopplerschnittstelle (11 c) enthält;
Mittel (23), geeignet zum Übermitteln von Fahrzeugkonto-Informationen für die zu leistende Zahlung für die gelieferte elektrische Energie an den Koppler (13), wobei das dem Fahrzeug zugeordnete Fahrzeugkonto für den Empfang der Zahlung dient, die für die von dem Fahrzeug gelieferte elektrische Energie zu leisten ist; und
Mittel (21), geeignet zum Messen der an den Koppler (13) gelieferten elektrischen Energie, und geeignet zum Übermitteln von Messinformationen, die die an den Koppler (13) gelieferte elektrische Energie anzeigen, zu dem Koppler.

2. Verfahren zum Betreiben eines Fahrzeugs, das so ausgestattet ist, dass es gezwungen wird, einem Weg zu folgen, der durch eine Schiene oder Führungsbahn oder Fahrleitung definiert ist, wobei das Verfahren enthält:
Erzeugen elektrischer Energie unter Verwendung von Solarkollektoren, die auf der Oberfläche des Fahrzeugs (11) angeordnet sind;
Liefern der elektrischen Energie von dem Fahrzeug für eine fahrzeugferne Nutzung an einen Koppler (13), der fahrzeugfern angeordnet ist, Teil eines fahrzeugfernen Energieknotens ist und einen elektrischen Leiter aufweist, der entlang des Weges angeordnet ist, über eine am Fahrzeug angebrachte Kopplerschnittstelle (11 c);
Übermitteln von Fahrzeugkonto-Informationen, die dem Fahrzeug für die Zahlung zugeordnet ist, die für die gelieferte elektrische Energie zu leisten ist, von dem Fahrzeug (11) an den Koppler (13), wobei das Fahrzeugkonto, das dem Fahrzeug zugeordnet ist, für den Empfang der Zahlung dient, die für die von dem Fahrzeug gelieferte elektrische Energie zu leisten ist; und
Messen der an den Koppler (13) gelieferten elektrischen Energie am Fahrzeug, und
Übermitteln von Messinformationen, die die gemessene elektrische Energie anzeigen, an den Koppler.

3. System, enthaltend:
ein Fahrzeug nach Anspruch 1 und
einen fahrzeugfernen Energieknoten (12), enthaltend:
Mittel, geeignet zum Aufnehmen der elektrischen Energie von dem Fahrzeug für eine fahrzeugferne Nutzung, wobei die Mittel einen fahrzeugfern angeordneten Koppler (13) enthalten und einen elektrischen Leiter aufweisen, der entlang des durch eine Schiene oder Führungsbahn oder eine Fahrleitung definierten Weges angeordnet ist;
Mittel, geeignet zum Empfangen von Abrechnungsinformationen und Messinformationen vom Fahrzeug über den Koppler (13); und
Mittel, geeignet zum Weiterleiten der Abrechnungsinformationen und Messinformationen zu Einrichtungen (30) eines externen Dritten.

## Revendications

1. Un véhicule (11), comprenant:
des moyens adaptés pour se déplacer le long d'un chemin défini par un rail ou une voie de guidage ou une caténaire,
des moyens pour produire de l'énergie électrique faisant emploi de capteurs solaires disposés sur la surface du véhicule ;
des moyens (21) adaptés pour fournir l'énergie électrique produite par les capteurs solaires, pour une utilisation extérieure au véhicule, par un coupleur (13) situé hors du véhicule, qui fait partie d'un noeud de puissance extérieur au véhicule et qui comporte un conducteur électrique (13a) disposé le long du chemin, dans lequel les moyens pour fournir l'énergie électrique comprennent une interface de coupleur (11c) fixée au véhicule ;
des moyens (23) adaptés pour communiquer au coupleur (13) l'information de comptage de la consommation du véhicule en vue du paiement de l'énergie électrique fournie, le comptage de la consommation du véhicule étant envoyée au véhicule servant à recevoir le paiement à effectuer pour l'énergie électrique qu'il fournit; et
des moyens (21) adaptés pour la mesure de l'énergie électrique fournie au coupleur (13) et adaptés pour communiquer au coupleur l'information de la mesure indicative de la puissance électrique fournie au coupleur (13).

2. Procédé d'exploitation d'un véhicule qui est équipé de façon à être contraint à suivre un chemin défini par un rail ou une voie de guidage ou une caténaire, le procédé comprenant :
la production de l'énergie électrique par emploi de capteurs solaires disposés sur une surface du véhicule (11) ;
la fourniture de l'énergie électrique, pour une utilisation extérieure au véhicule, à un coupleur (13) situé hors du véhicule, qui fait partie d'un noeud de puissance extérieur au véhicule et qui comporte un conducteur électrique disposé le long du chemin, par l'intermédiaire d'un interface de coupleur (11c) fixé au véhicule ;
la communication depuis le véhicule (11) au coupleur (13) de l'information de comptage de la consommation du véhicule associé au véhicule pour permettre le paiement de l'énergie électrique fournie, le comptage de la consommation du véhicule étant envoyée au véhicule servant à recevoir le paiement a effectuer pour l'énergie électrique qu'il fournit; et
la mesure de l'énergie électrique fournie au coupleur (13) sur le véhicule, et
la communication au coupleur de l'information de la mesure indicative de la puissance électrique mesurée.

3. Un système comprenant
un véhicule selon la revendication 1, et
un noeud de puissance (12) situé à l'extérieur du véhicule, comprenant :
des moyens adaptés pour recevoir ladite énergie électrique pour une utilisation extérieure au véhicule, à partir dudit véhicule, les moyens comprenant un coupleur (13) agencé hors du véhicule et présentant un conducteur électrique disposé le long dudit chemin défini par un rail, une voie de guidage ou un caténaire ;
des moyens adaptés pour recevoir l'information relative au comptage de la consommation et l'information de mesure de la consommation du véhicule via le coupleur (13) ; et
des moyens adaptés pour acheminer l'information de comptage et l'information de mesure à une installation tierce externe (30).
